Europäisches Patentamt

European Patent Office

Office européen des brevets

(19)

(11) Veröffentlichungsnummer: **0 155 651**
**B1**

# (12) EUROPÄISCHE PATENTSCHRIFT

(45) Veröffentlichungstag der Patentschrift:
**07.01.88**

(21) Anmeldenummer: **85103003.1**

(22) Anmeldetag: **15.03.85**

(51) Int. Cl.⁴: **B 01 D 37/02,** B 01 D 37/00,
B 01 D 36/02

(54) Verfahren zum Filtrieren von Flüssigkeiten und Filtrieranlage zur Durchführung des Verfahrens.

(30) Priorität: **23.03.84 CH 1484/84**

(43) Veröffentlichungstag der Anmeldung:
**25.09.85 Patentblatt 85/39**

(45) Bekanntmachung des Hinweises auf die Patenterteilung:
**07.01.88 Patentblatt 88/1**

(84) Benannte Vertragsstaaten:
**AT BE CH DE FR GB IT LI LU**

(56) Entgegenhaltungen:
**WO - A - 83/01014
FR - A - 1 574 913
US - A - 3 200 105
US - A - 3 262 565**

(73) Patentinhaber: **Filtrox Maschinenbau A.-G.,
Moosmühlenstrasse 6, CH-9030 St. Gallen (CH)**

(72) Erfinder: **Meier, Josef, Sonnenhaldenstrasse 10,
CH-9032 Engelburg (CH)**

(74) Vertreter: **Steudtner, Werner, Dipl.-Ing., Lindenhof 5,
CH-8604 Hegnau bei Zürich (CH)**

## Beschreibung

Die Erfindung bezieht sich auf ein Verfahren zum Filtrieren von Flüssigkeiten, bei dem eine mit Fremdstoffen belastete Flüssigkeit einer als Anschwemmfilter ausgebildeten ersten Filtriereinrichtung zugeleitet und beim Durchlaufen derselben von nahezu den gesamten mitgeführten Fremdstoffen befreit wird und danach mit einem in der ersten Filtriereinrichtung nicht zurückgehaltenen Fremdstoffrest zur Nachfiltration einer zweiten Filtriereinrichtung zugeleitet wird, in der der Fremdstoffrest zumindest zum überwiegenden Teil ausfiltriert wird, sowie auf eine Filtrieranlage zur Durchführung dieses Verfahrens.

Verfahren dieser Art sind schon seit längerer Zeit, beispielsweise von der Getränkefiltration, insbesondere der Bier- und Weinfiltration, her bekannt. Bei diesen bekannten Verfahren wird als zur Nachfiltration dienende zweite Filtriereinrichtung in der Regel eine Filterpresse bzw. ein sogenanntes Schichtenfilter verwendet, bei dem die einzelnen Filterschichten zum Zwecke der Zurückhaltung des genannten, in der ersten Filtriereinrichtung nicht ausfiltrierten Fremdstoffrestes eine gegenüber der mittleren Porösität der Anschwemmschichten der als Anschwemmfilter ausgebildeten ersten Filtriereinrichtung geringere Porösität aufweisen. Infolge dieser geringeren Porösität ihrer Filterschichten benötigen diese Filterpressen bzw. Schichtenfilter jedoch eine grössere Gesamtfilterfläche als die erste Filtriereinrichtung, um die durch die erste Filtriereinrichtung vorgegebene Durchflussmenge pro Zeiteinheit bewältigen zu können, und damit liegt auch der von der Gesamtfilterfläche abhängige technische Gesamtaufwand für diese Schichtenfilter bzw. allgemein für die zweite Filtriereinrichtung bei den bekannten Verfahren der eingangs genannten Art in der gleichen Grössenordnung wie oder sogar noch höher als der technische Gesamtaufwand für die erste Filtriereinrichtung. Gemessen an der Filtrierleistung, die die ja nur den genannten geringfügigen Fremdstoffrest ausfiltrierende zweite Filtriereinrichtung im Vergleich zu der nahezu die gesamte Fremdstoffbelastung ausfiltrierenden ersten Filtriereinrichtung erbringt, ist infolgedessen der technische Gesamtaufwand für die zweite Filtriereinrichtung im Vergleich zur ersten Filtriereinrichtung bei den bekannten Verfahren der eingangs genannten Art unverhältnismässig gross. Das gilt insbesondere für die in der Regel als zweite Filtriereinrichtung verwendeten Filterpressen bzw. Schichtenfilter, denn Filterpressen müssen ja bekanntlich wegen der auf die Pressränder ausgeübten ausserordentlich hohen Drücke sehr stabil aufgebaut sein und sind daher schon wegen ihres sich daraus ergebenden hohen Gewichtes mit beträchtlichen Investitionskosten verbunden, und ausserdem beanspruchen Schichtenfilter auch relativ grosse Standflächen sowie verhältnismässig hohe Betriebskosten, weil erstens die Kosten für die periodisch auszuwechselnden Filterschichten wegen der schon erwähnten relativ grossen Gesamtfilterfläche beträchtlich sind und zudem der Betrieb von Schichtenfiltern, z.B. im Vergleich zu rückspülbaren Kerzenanschwemmfiltern, sehr personalintensiv ist, weil das Auswechseln der Filterschichten in aller Regel von Hand vorgenommen werden muss.

Der Erfindung lag daher die Aufgabe zugrunde, ein Verfahren der eingangs genannten Art sowie eine Filtrieranlage zur Durchführung dieses Verfahrens zu schaffen, bei denen der technische Gesamtaufwand für die zweite Filtriereinrichtung bedeutend geringer als bei den bekannten Verfahren der eingangs genannten Art ist und bei denen daher der oben erwähnte unverhältnismässig grosse Aufwand für die zweite Filtriereinrichtung vermieden wird.

Erfindungsgemäss wird das bei einem Verfahren der eingangs genannten Art dadurch erreicht, dass als zweite Filtriereinrichtung ein Filter mit einem als Faserschicht ausgebildeten Filtermedium von grösserer Porösität als der mittleren Porösität der Anschwemmschichten der als Anschwemmfilter ausgebildeten ersten Filtriereinrichtung verwendet wird, dessen Filterfläche kleiner als die Filterfläche der ersten Filtriereinrichtung ist.

Der Hauptvorteil der vorliegenden Erfindung liegt darin, dass der für eine Feinstfiltration erforderliche technische Aufwand gegenüber dem bisher hierfür erforderlichen Aufwand ganz beträchtlich verringert wird. Die beträchtliche Verringerung des technischen Aufwandes ergibt sich in erster Linie daraus, dass für die Nachfiltration bei dem vorliegenden Verfahren Filter mit einer wesentlich geringeren Gesamtfilterfläche als derjenigen der bisher zur Nachfiltration benützten Filtriereinrichtungen verwendet werden können, und das wiederum liegt daran, dass bei dem vorliegenden Verfahren zur Nachfiltration ein Filtermedium von grösserer Porösität als derjenigen der zur Hauptfiltration benützten Anschwemmschichten verwendet wird. Dass dies entgegen jeder Erwartung überhaupt möglich ist, beruht auf der Erkenntnis, dass Anschwemmfilter jeweils während der sehr kurzen Zeitabschnitte, in denen sämtliche Anschwemmschichten des Filters stabil bleiben, bereits eine Feinstfiltration liefern, und dass der ein Anschwemmfilter verlassende Fremdstoffrest praktisch ausschliesslich durch Instabilitäten der Anschwemmschichten, die durch den laufenden Anstieg des Druckes auf die Anschwemmschichten während der Filtration und dadurch bewirkte Strukturveränderungen in den Primäranschwemmschichten ausgelöst werden, verursacht wird und im wesentlichen von aus der Primäranschwemmung der Anschwemmschichten stammenden Filterhilfsmittelpartikeln gebildet wird. Denn bei einem Anschwemmfilter wird die Anschwemmschicht von einem Tragorgan getragen, dessen zum Durchlass des die Anschwemmschicht verlassenden Filtrats vorgesehene Öffnungen mit Öffnungsweiten von z.B. 50 bis 100 µm wesentlich grösser als die z.B. in einem Streubereich von 1 bis 40 µm liegenden Partikelgrössen des zur Bildung der Primäranschwemmschicht verwendeten, beispielsweise aus Kieselgur bestehenden Filterhilfsmittels sind, und die die Primäranschwemmung bildenden Filterhilfsmittelpartikel mit ihrer gegenüber den Tragorganöffnungen geringeren Partikelgrösse werden nur deswegen nicht von dem die Anschwemmschicht verlassenden Filtrat durch diese Tragorganöffnungen mitgenommen, weil sich in der Primäranschwemmschicht über den Tragorganöffnungen bei kreisrunder Form derselben domartige und bei schlitzartiger Form tunnelförmige Hohlräume bilden, die von sich gegenseitig aufeinander abstützenden Filterhilfsmittelpartikeln begrenzt werden, und diese von sich aufeinander abstützenden Filterhilfsmittelpartikeln gebildeten «Begrenzungswände» der domartigen oder tunnelförmigen Hohlräume haben natürlich relativ geringe und aufgrund ihrer Zufallsstruktur stark variierende Belastungsgrenzen, bei deren Überschreitung sie zusammenbrechen, und bei dem Zusammenbruch einer solchen Begrenzungswand wird dann von dem durchströmenden Filtrat jeweils eine grosse Anzahl Filterhilfsmittelpartikel mitgenommen und durch die betreffende Tragorganöffnung mitgeführt, bis sich aus den nachrückenden Filterhilfsmittelpartikeln der Primäranschwemmschicht eine neue, wiederum einen domartigen oder tunnelförmigen Hohlraum bildende Begrenzungswand aufgebaut hat. Da nun einerseits während der Dauer der Filtration die Menge der ausfiltrierten Fremdstoffe und damit die Dicke der Anschwemmschichten ständig ansteigt und mit dieser ansteigenden Dicke der Anschwemmschichten auch der Strömungswiderstand derselben und damit der Druckabfall über denselben ansteigen muss und sich infolgedessen während der Dauer der Filtration der Druck auf die Anschwemmschichten und damit auch auf die Primäranschwemmschichten ständig erhöht, und andererseits, wie oben schon erwähnt, die Begrenzungswände der genannten, von Filterhilfsmittelpartikeln begrenzten domartigen oder tunnelförmigen Hohlräume relativ geringe, stark variierende Belastungsgrenzen haben und beim Überschreiten dieser Belastungsgrenzen zusammenbrechen, ergeben sich während der Filtrationsdauer und des damit verbundenen Druckanstiegs auf die Primäranschwemmschichten in kurzen Zeitabständen Überschreitungen der Belastungsgrenzen von einzelnen der genannten Begrenzungswände und damit punktuelle Zusammenbrüche dieser Begrenzungswände, die jeweils eine Fremdstoffbelastung des Filtrats mit einer grösseren Anzahl von Filterhilfsmittelpartikeln auslösen, so dass das ein Anschwemmfilter verlassende Filtrat trotz der Tatsache, dass jeweils nur an einzelnen Punkten der Gesamtfilterfläche solche Zusammenbrüche auftreten und die gesamte übrige Filterfläche Feinstfiltration liefert, praktisch während der gesamten Filtration einen Fremdstoffrest enthält, der im wesentlichen von aus diesen punktuellen Zusammenbrüchen stammenden Filterhilfsmittelpartikeln gebildet wird. Mit der Erkenntnis, dass Anschwemmfilter bei stabilen Anschwemmschichten bereits Feinstfiltration liefern und der Fremdstoffrest in dem ein Anschwemmfilter verlassenden Filtrat abgesehen von einem geringfügigen Gewichtsanteil an Fremdstoffteilchen, die wegen ihrer geringen Partikelgrösse auch bei einer Feinstfiltration nicht ausfiltriert werden können, praktisch ausschliesslich aus Filterhilfsmittelpartikeln besteht, war es somit möglich, die Nachfiltration auf das Ausfiltrieren der den Fremdstoffrest im wesentlichen bildenden Filterhilfsmittelpartikel zu begrenzen, und diesen Zweck erfüllt, wie sich herausgestellt hat, auch ein als Faserschicht ausgebildetes Filtermedium von grösserer Porösität als der mittleren Porösität der Anschwemmschichten des Anschwemmfilters, denn in einer solchen Faserschicht bleiben die Filterhilfsmittelpartikel aufgrund ihrer starken äusserlichen Strukturierung auch dann hängen, wenn sie aufgrund einer unter der Porösität der Faserschicht liegenden Partikelgrösse theoretisch in der Lage wären, die Faserschicht zu passieren. Die relativ grosse Porösität des zur Nachfiltration verwendeten, als Faserschicht ausgebildeten Filtermediums erlaubt Filterflächen des für die Nachfiltration verwendeten Filters von weniger als einem Zehntel der Filterfläche des Anschwemmfilters, und damit sind natürlich in vielerlei Hinsicht Verringerungen des technischen Aufwandes verbunden. So sind zunächst einmal die Investitionskosten für die zur Nachfiltration verwendeten zweiten Filtriereinrichtung relativ gering, der Raumbedarf und insbesondere auch die Standfläche für die zweite Filtriereinrichtung ist relativ klein, und natürlich sind auch die Betriebskosten für die zweite Filtriereinrichtung wesentlich geringer als bei den bisher für den gleichen Zweck verwendeten Schichtenfiltern mit grösserer Filterfläche als der des vorgeschalteten Anschwemmfilters, weil die beim Auswechseln des Filtermediums zu ersetzende Filterfläche weniger als ein Zehntel der bisher zu ersetzenden Filterfläche beträgt, so dass sowohl der Materialbedarf beim Ersatz von verbrauchtem Filtermedium als auch der hierfür erforderliche Arbeitsaufwand auf weniger als ein Zehntel zusammenschrumpfen, ganz abgesehen davon, dass zudem auch noch die Gesamtbetriebsdauer von als Faserschicht ausgebildeten Filtermedien in der Regel wesentlich grösser als bei den üblichen Filterschichten von Schichtenfiltern ist. Der technische Gesamtaufwand liegt daher bei dem vorliegenden Verfahren im Schnitt beinahe um die Hälfte niedriger als bei den bekannten Verfahren der eingangs genannten Art, so dass das vorliegende Verfahren gegenüber den bekannten Verfahren der eingangs genannten Art ganz beträchtliche Vorteile mit sich bringt.

Vorzugsweise wird bei dem vorliegenden Verfahren als zweite Filtriereinrichtung ein Filter verwendet, dessen Filterfläche kleiner als ein Fünftel, vorzugsweise kleiner als ein Zehntel, der Filterfläche der ersten Filtriereinrichtung ist. Durch diese relativ kleine Filterfläche der zweiten Filtriereinrichtung ergibt sich der Vorteil, dass der technische Gesamtaufwand für die zweite Filtriereinrichtung in der Regel unter 10% des technischen Gesamtaufwandes für die erste Filtriereinrichtung liegt.

Bei einer bevorzugten Ausführungsform des vorliegenden Verfahrens wird als zweite Filtriereinrichtung ein Filter mit einem als Faserschicht ausgebildeten Filtermediums von grösserer Dicke als der mittleren Dicke der Primäranschwemmungen der Anschwemmschichten der als Anschwemmfilter ausgebildeten ersten Filtriereinrichtung verwendet. Die Dicke der Faserschicht bzw. des Filtermediums kann dabei zweckmässig grösser als das Doppelte der mittleren Dicke der Primäranschwemmungen der Anschwemmschichten der ersten Filtriereinrichtung sein. Die relativ grosse Dicke der Faserschicht bzw. des Filtermediums hat erstens den Vorteil, dass die Aufnahmefähigkeit einer relativ dicken Schicht bis zum Zustand der Verstopfung des Filtermediums natürlich wesentlich grösser als diejenige einer relativ dünnen Schicht ist, so dass sich längere Betriebszeiten sowie wegen des weniger häufigen Auswechselns ein geringerer Arbeitsaufwand für den Betrieb ergibt, und zweitens ist bei einer das Filtermedium bildenden relativ dicken Faserschicht die Wahrscheinlichkeit, dass auch die kleinsten Filterhilfsmittelpartikel (die aufgrund ihrer Partikelgrösse sowie der Porösität der Faserschicht theoretisch das Filtermedium passieren könnten) sich an einer der Fasern der Faserschicht verhaken und damit in dem Filtermedium hängen bleiben, natürlich wesentlich grösser als bei einer das Filtermedium bildenden relativ dünnen Faserschicht.

Mit besonderem Vorteil können bei dem vorliegenden Verfahren als Filterelemente für die zweite Filtriereinrichtung Filterkerzen mit einem rohrförmigen Tragorgan und einem darauf spiralförmig aufgewickelten Faservlies von mindestens annähernd gleicher Breite wie der Länge des Tragorgans verwendet werden, wobei mit dem Faservlies ein oder mehrere schräg zur Bahnrichtung desselben verlaufende, die übereinanderliegenden Faservliesabschnitte zusammenhaltende Schnüre aufgewickelt sind und der gesamte mit den Schnüren nach Art eines Schnurwikkels zusammemgehaltene Faservlieswickel das Filtermedium der betreffenden Filterkerze bildet. Vorteilhaft ist an der Verwendung solcher kerzenförmiger Filterelemente für die zweite Filtriereinrichtung insbesondere die leichte Auswechselbarkeit solcher Filterkerzen und die sich damit ergebenden Einsparungen an Arbeitsaufwand beim Auswechseln verstopfter Filterkerzen.

Zweckmässig wird bei dem vorliegenden Verfahren als Filterhilfsmittel zur Bildung der Primäranschwemmungen der Anschwemmschichten der als Anschwemmfilter ausgebildeten ersten Filtriereinrichtung Kieselgur verwendet.

Die Erfindung betrifft weiter eine Filtrieranlage zur Durchführung des vorliegenden Verfahrens, bestehend aus zwei hintereinandergeschalteten Filtriereinrichtungen, von denen die zur Hauptfiltration dienende erste Filtriereinrichtung ein Anschwemmfilter ist, dadurch gekennzeichnet, dass die zur Nachfiltration dienende zweite Filtriereinrichtung ein mit einem als Faserschicht ausgebildeten Filtermedium versehenes Filter umfasst, dessen Porösität grösser als die mittlere Porösität der Anschwemmschichten der ersten Filtriereinrichtung ist und dessen Filterfläche kleiner als die Hälfte der Filterfläche der ersten Filtriereinrichtung ist.

Die Vorteile der vorliegenden Filtrieranlage sind im wesentlichen die gleichen wie die des vorliegenden Verfahrens, nämlich eine beträchtliche Verminderung des für eine Feinfiltration erforderlichen technischen Aufwandes gegenüber dem bisher hierfür erforderlichen technischen Aufwand.

Vorteilhaft kann die Filterfläche der zweiten Filtriereinrichtung kleiner als ein Fünftel, vorzugsweise kleiner als ein Zehntel, der Filterfläche der ersten Filtriereinrichtung sein. Der technische Gesamtaufwand verringert sich damit auf annähernd die Hälfte des bei den zum gleichen Zweck dienenden bekannten Filtrieranlagen erforderlichen Aufwandes.

Mit besonderem Vorteil kann bei der vorliegenden Filtrieranlage die erste Filtriereinrichtung ein als rückspülbares Kerzenfilter ausgebildetes Anschwemmfilter und die Filterfläche der zweiten Filtriereinrichtung kleiner als das 0,75fache, vorzugsweise kleiner als das 0,3fache, der Summe der Aussenflächen sämtlicher Filterkerzen dieses als Kerzenfilter ausgebildeten Anschwemmfilters sein. Die Ausbildung der ersten Filtriereinrichtung als rückspülbares Kerzenfilter hat bekanntlich den Vorteil, dass das täglich erforderliche Austragen der ausfiltrierten Fremdstoffe und die damit verbundene Filterreinigung bei rückspülbaren Kerzenfiltern ohne Öffnung des Filtergehäuses und damit im Prinzip ohne manuellen Arbeitsaufwand erfolgen kann. In Verbindung mit einer ebenfalls über eine längere Zeit ohne Öffnung des Filtergehäuses betreibbaren zweiten Filtriereinrichtung lässt sich damit der Betrieb der vorliegenden Filtrieranlage nahezu vollständig automatisieren, was zweifellos von wesentlichem Vorteil ist.

Bei einer bevorzugten Ausbildungsform der vorliegenden Filtrieranlage ist die zweite Filtriereinrichtung ein Kerzenfilter. Diese Ausbildung ermöglicht eine Reihe von Vorteilen, nämlich u.a. den zuvor erwähnten Betrieb über eine längere Zeit ohne Öffnung des Filtergehäuses und auch ein besonders leichtes und damit nur einen geringen Arbeitsaufwand erforderndes Auswechseln der Filterkerzen, ferner Rückspülbarkeit zu Reinigungs- und Sterilisationszwecken und einen relativ geringen technischen Aufwand für die Herstellung der Filterkerzen bzw. der das Filtermedium bildenden Faserschicht auf denselben.

Mit besonderem Vorteil kann die vorliegende Filtrieranlage dabei so ausgebildet sein, dass die Filterkerzen des die zweite Filtriereinrichtung bildenden Kerzenfilters stehende Kerzen mit am unteren Kerzenende angeordnetem, mit dem Kerzeninnenraum verbundenem Filtratablauf sind, wobei die Filtratabläufe der Filterkerzen vorzugsweise in einen unter den Filterkerzen liegenden gemeinsamen Filtratraum münden, der durch eine die stehenden Kerzen tragende Trennwand von einem gemeinsamen Unfiltratraum des Filters abgetrennt ist. Durch die Ausbildung mit stehenden Filterkerzen wird besonders das Auswechseln der Filterkerzen wesentlich vereinfacht, und die Aufteilung des Filtergehäuses in gemeinsamen Filtratraum und gemeinsamen Unfiltratraum ist für die genannte Rückspülbarkeit zu Reinigungs- und Sterilisationszwecken wesentlich.

Zweckmässig sind die Filterkerzen des die zweite Filtriereinrichtung bildenden Kerzenfilters von oben her auswechselbar und mit ihren oberen Kerzenenden, vorzugsweise mittels je einer Vertikalführung sowie einer Druckfeder, an einer Halteplatte lösbar befestigt.

Der erwähnte geringe technische Aufwand für die Herstellung der Filterkerzen des die zweite Filtriereinrichtung bildenden Kerzenfilters ergibt sich bei der vorliegenden Filtrieranlage dadurch, dass diese Filterkerzen je ein rohrförmiges durchbrochenes Tragorgan sowie ein darauf spiralförmig aufgewickeltes Faservlies von mindestens annähernd gleicher Breite wie der Länge des Tragorgans umfassen, wobei vorzugsweise jeweils mit dem Faservlies ein oder mehrere schräg zur Bahnrichtung desselben verlaufende, die übereinanderliegenden Faservliesabschnitte zusammenhaltende Schnüre aufgewickelt sind und der gesamte mit den Schnüren nach Art eines Schnurwickels zusammengehaltene Faservlieswickel das Filtermedium der betreffenden Filterkerze bildet.

Die Erfindung ist im folgenden an einem Ausführungsbeispiel näher erläutert:

Unfiltriertes Bier wird zur Filtration zunächst einem als rückspülbares Anschwemmfilter ausgebildeten, die genannte erste Filtriereinrichtung bildenden Kerzenfilter mit hängenden Filterkerzen zugeleitet, nachdem die Filterkerzen dieses Kerzenanschwemmfilters zuvor mit einer Primäranschwemmung versehen worden sind. Als Filterhilfsmittel für die Primäranschwemmung wird Kieselgur verwendet. Die Primäranschwemmung erfolgt in zwei Stufen, wobei in der ersten Stufe grobe Kieselgur mit Partikelgrössen im Bereich von 4 bis 10 µm und in der zweiten Stufe mittelfeine und feine Kieselgur mit Partikelgrössen im Bereich von 1 bis 25 µm angeschwemmt wird. Während der Filtration wird dem unfiltrierten Bier, wie bei Anschwemmfiltern üblich, ebenfalls Filterhilfsmittel in Form von Kieselgur zugeführt, das sich dann zusammen mit dem in dem unfiltrierten Bier enthaltenen Trub auf der Primäranschwemmung absetzt und zur Auflockerung des sogenannten Trubkuchens bzw. zur Aufrechterhaltung der Flüssigkeitsdurchlässigkeit desselben und damit zur Verhinderung einer Verstopfungsgefahr dient. Die Primäranschwemmung sowie der darauf abgesetzte, mit Kieselgur durchsetzte Trub bilden zusammen die Anschwemmschicht. Die Summe der für die Filtration wirksamen Aussenflächen der Filterkerzen des Kerzenanschwemmfilters beträgt im vorliegenden Fall 53,67 m², die Filterfläche dieses die erste Filtriereinrichtung bildenden Kerzenanschwemmfilters 80,5 m² und die Filtrierleistung 400 Hektoliter/Stunde. Bei der Filtration in dem Kerzenanschwemmfilter werden alle in dem unfiltrierten Bier enthaltenen Trubteile und -teilchen von einer Partikelgrösse von mehr als ca. 1,3 µm, unter anderem die eine Grösse von ca. 3 bis 9 µm aufweisenden Hefezellen und ein grosser Teil der eine Zellgrösse von ca. 1 bis 2 µm aufweisenden Bakterien in der Anschwemmschicht zurückgehalten. Die Anschwemmschicht des Kerzenanschwemmfilters bzw. der ersten Filtriereinrichtung hat somit eine Porösität von ca. 1,3 µm. Das die erste Filtriereinrichtung verlassende Vorfiltrat enthält daher als Fremdstoffrest nur Trubteilchen von geringerer Teilchengrösse als ca. 1,3 µm und ferner Filterhilfsmittelpartikel, also im vorliegenden Fall Kieselgurpartikel, die durch die oben schon erläuterten Zusammenbrüche der von Filterhilfsmittelpartikeln begrenzten domartigen oder tunnelförmigen Hohlräume über den in den Filterkerzen vorgesehenen Durchlassöffnungen in das Vorfiltrat gelangt sind. Allerdings setzt sich das in dem Vorfiltrat als Fremdstoffrest enthaltene Filterhilfsmittel nicht nur, wie man zunächst annehmen könnte, aus Kieselgurpartikeln der in der ersten Stufe der Primäranschwemmung angeschwemmten groben Kieselgur mit Partikelgrössen von 4 bis 40 µm sondern zum Teil auch aus kleineren Kieselgurpartikeln der in der zweiten Stufe der Primäranschwemmung angeschwemmten mittelfeinen und feinen Kieselgur mit Partikelgrössen bis hinunter auf ca. 1 µm zusammen, die während der Filtration von der durch die Primäranschwemmung fliessenden Flüssigkeit mitgenommen werden und so bis zu einer später zusammengebrochenen Begrenzungswand eines der genannten domartigen oder tunnelförmigen Hohlräume gelangt sind. In praktisch vernachlässigbar geringem Umfang sind in dem von den genannten Zusammenbrüchen her stammenden Fremdstoffrest auch Trubteilchen von grösserer Teilchengrösse als ca. 1,3 µm enthalten, die in der Regel von der unmittelbar auf der Primäranschwemmung aufliegenden untersten Lage des Trubkuchens stammen und auf die gleiche Weise wie die feinen Kieselgurpartikel zu einer der genannten, später dann zusammengebrochenen Begrenzungswände gelangt sind. Gesamthaft gesehen enthält das die erste Filtriereinrichtung verlassende Vorfiltrat also als Fremdstoffrest in erster Linie Filterhilfsmittelpartikel, und zwar zum grossen Teil mit einer Partikelgrösse zwischen 4 und 40 µm und zu einem geringen Teil auch mit einer Partikelgrösse zwischen 1 und 4 µm, sowie ferner eine relativ geringe Menge von auch durch Feinstfiltration nicht ausfiltrierbaren, hauptsächlich aus Bakterien bestehenden Trubteilchen von einer Partikelgrösse unter 1,3 µm und eine praktisch vernachlässigbar geringe Anzahl von Trubteilchen mit einer Partikelgrösse über 1,3 µm. Aufgrund dieser Zusammensetzung des Fremdstoffrestes in dem die erste Filtriereinrichtung verlassenden Vorfiltrat war man bisher der Ansicht, dass ein Ausfiltrieren dieses Fremdstoffrestes aus dem Vorfiltrat in einer nachgeschalteten zweiten Filtriereinrichtung nur mit einem Filtermedium von geringerer Porösität als ca. 1,3 µm und einer entsprechend grossen Filterfläche von etwa gleicher Grössenordnung wie der Filterfläche der ersten Filtriereinrichtung möglich sei.

Im vorliegenden Fall hingegen wird das das Kerzenanschwemmfilter bzw. die erste Filtriereinrichtung verlassende Vorfiltrat einer nur 3,4 m² Filterfläche und damit nur rund 4% der Filterfläche der ersten Filtriereinrichtung aufweisenden zweiten Filtriereinrichtung zugeleitet, deren Filtermedium eine wesentlich grössere Porösität als die Anschwemmschicht in der ersten Filtriereinrichtung hat. Die zweite Filtriereinrichtung ist ebenfalls wie die erste Filtriereinrichtung ein Kerzenfilter, jedoch nicht mit hängenden sondern mit stehenden Filterkerzen, an deren unteren Kerzenenden je ein mit dem Kerzeninnenraum verbundener und in einen unter den Filterkerzen liegenden gemeinsamen Filtratraum mündender Filtratablauf vorgesehen ist. Der gemeinsame Filtratraum ist durch eine die stehenden Kerzen tragende Trennwand von einem gemeinsamen Unfiltratraum des Filters, in den die stehenden Kerzen hineinragen, abgetrennt. Die Filterkerzen des die zweite Filtriereinrichtung bildenden Kerzenfilters bestehen im wesentlichen aus je einem durchbrochenen Tragrohr sowie einem darauf spiralförmig aufgewickelten Faservlies von mindestens annähernd gleicher Breite wie der Länge des Tragrohrs, wobei jeweils mit dem Faservlies ein oder mehrere schräg zur Bahnrichtung desselben verlaufende, die übereinanderliegenden Faservliesabschnitte zusammenhaltende Schnüre aufgewickelt sind und der gesamte mit den Schnüren nach Art eines Schnurwickels zusammengehaltene Faservlieswickel das Filtermedium der betreffenden Filterkerze bildet. Die Faservlieswickel haben eine Faserschichtdicke von 17,5 mm (= Differenz zwischen Aussenradius und Innenradius des Wickels), ein Volumen V von je 1780 cm³ und ein Gewicht G von je 550 g. Sowohl das Faservlies wie auch die Schnüre der Faservlieswickel bestehen aus wasser- und hitzefestem, mit Dampf bis zu 120°C sterilisierbarem Polypropylen mit einem spezifischen Gewicht $\gamma$ von 0,91 g/cm³. Das Faservlies besteht dabei aus relativ langen Fasern mit einer mittleren Faserstärke d von ca. 2 µm. Der mittlere Abstand a der Fasern in dem Faservlieswickel lässt sich aus dem Füllungsgrad F des von dem Faservlieswickel eingenommenen Volumens V mit Fasermaterial bestimmen. Der Füllungsgrad F entspricht einerseits dem Verhältnis des Volumens $V_M$ des Fasermaterials zum Volumen V des Faservlieswickels und andererseits dem Verhältnis des Faserquerschnitts $d^2\pi/4$ zu der bei einem Faserabstand a von einer Faser eingenommenen Querschnittsfläche $d \cdot (d + a)$ und ist also

$$F = \frac{V_M}{V} = \frac{d^2\pi/4}{d(d+a)}.$$

Da das Gewicht G des Faservlieswickels gleich dem Gewicht des Fasermaterials und damit gleich dem Produkt aus dem Volumen $V_M$ des Fasermaterials und dem spezifischen Gewicht $\gamma$ desselben ist, ergibt sich mit $G = \gamma V_M$ bzw. $V_M = G/\gamma$ für den mittleren Faserabstand a die Beziehung

$$\frac{G}{\gamma \cdot V} = \frac{d^2\pi/4}{d(d+a)} = \frac{d^2\pi/4}{d^2(1+a/d)} = \frac{\pi}{4(1+a/d)} \quad \text{und}$$

daraus $a = d \cdot (\frac{\pi\gamma V}{4G} - 1)$.

Im vorliegenden Fall ergibt sich somit für den mittleren Abstand a der Fasern in dem Faservlieswickel mit $\gamma = 0,91$ g/cm³, $V = 1780$ cm³, $G = 500$ g und d = 2 µm ein Wert von a = 2,626 µm. Bei regelmässiger Anordnung der Fasern könnte die Porösität des Faservlieswickels nun im Minimum gleich dem mittleren Abstand der Fasern in dem Faservlieswickel sein, aber da die Anordnung der Fasern in dem Faservlies natürlich völlig unregelmässig ist, ist die Porösität des Faservlieswickels etwa gleich dem Doppelten des mittleren Abstandes der Fasern in dem Faservlieswickel und damit also ca. 5,25 µm. Eine praktische Überprüfung dieser theoretisch ermittelten Porösität ergab, dass beim Durchlauf einer Hefezellen enthaltenden Flüssigkeit durch die zweite Filtriereinrichtung ein kleiner Anteil der Hefezellen, vorwiegend mit Zellengrössen zwischen 3 und 4 µm, die das Filtermedium der Filterkerzen der zweiten Filtriereinrichtung bildenden Faservlieswickel passieren konnte, während die grösseren Hefezellen mit Zellengrössen zwischen 6 und 9 µm von dem Faservlieswickel zurückgehalten wurden, so dass die ermittelte Porösität des Faservlieswickels von 5,25 µm im Experiment bestätigt wurde. Bei dem vorliegenden Verfahren sind jedoch in dem der zweiten Filtriereinrichtung zugeleiteten, von der ersten Filtriereinrichtung her kommenden Vorfiltrat gar keine Hefezellen enthalten, weil diese — wie oben schon erläutert — bereits von den Anschwemmschichten der ersten Filtriereinrichtung zurückgehalten werden, so dass trotz der Durchlässigkeit der Faservlieswickel für kleinere Hefezellen in dem die zweite Filtriereinrichtung verlassenden Filtrat keine Hefezellen enthalten sind. Von dem im Vorfiltrat enthaltenen Fremdstoffrest werden bei dem vorliegenden Verfahren über 95%, meist sogar über 99%, in dem Faservlieswickel zurückgehalten, unter anderem praktisch alle im Vorfiltrat enthaltenen Kieselgurpartikel. Dass die das Filtermedium der zweiten Filtriereinrichtung bildenden Faservlieswickel dabei trotz ihrer relativ grossen Porösität von 5,25 µm auch die Kieselgurpartikel mit Partikelgrössen von 1 bis 5 µm zurückhalten, liegt hauptsächlich daran, dass die Kieselgurpartikel äusserlich sehr stark strukturiert sind und sich daher an den Fasern des Faservlieses verhaken und infolgedessen auch an Stellen des Faservlieswickels hängen bleiben, die sie an und für sich mit ihrer Partikelgrösse hätten passieren können. Einen gewissen Einfluss hat dabei auch die relativ grosse Faserschichtdicke des Faservlieswickels von 17,5 mm, da infolge dieser grossen Faserschichtdicke die Wahrscheinlichkeit ausserordentlich gross ist, dass Kieselgurpartikel mit unter der Porösität des Faservlieswickels liegenden Partikelgrössen an irgendeiner Stelle hängen bleiben, auch wenn sie vorher schon durch eine grössere Zahl von potentiellen Verhakungsstellen durchgekommen sind, und dass solche Kieselgurpartikel auch dann, wenn sie sich schon einmal verhakt hatten und von der durchströmenden Flüssigkeit wieder losgerissen worden sind, noch genügend weitere potentielle Verhakungsstellen passieren, um an einer derselben wieder hängenzubleiben.

In dem die zweite Filtriereinrichtung und damit die gesamte Filtrieranlage verlassenden Filtrat sind daher praktisch nur noch Trubteilchen mit einer Partikelgrösse unter 1,3 µm, also praktisch nur noch sehr kleine, auch mit einer Feinfiltration nicht ausfiltrierbare Bakterien enthalten. Das vorliegende Verfahren und die beschriebene Filtrieranlage ermöglichen also Feinstfiltration mit einem technischen Aufwand, der nur noch etwa halb so gross wie der bisher hierfür erforderliche technische Aufwand ist. Der technische Aufwand für die zweite Filtriereinrichtung ist schon wegen ihrer geringen Filterfläche von nur ca. 4% derjenigen der ersten Filtriereinrichtung sowohl gegenüber dem für die erste Filtriereinrichtung erforderlichen technischen Aufwand als auch gegenüber dem technischen Aufwand für die bisher als zweite Filtriereinrichtung verwendeten Schichtenfilter vernachlässigbar gering. Hinzu kommt, dass auch die Betriebskosten für die zweite Filtriereinrichtung vergleichsweise ausserordentlich niedrig sind. So brauchen die Filterkerzen der zweiten Filtriereinrichtung bei der hier vorliegenden Filtrierleistung von 400 Hektoliter/Stunde unter der Voraussetzung einer täglichen Filtrierdauer von 12 Stunden und täglicher Rückspülung der ersten Filtriereinrichtung (mit anschliessender neuer Primäranschwemmung) nur alle 2 bis 3 Wochen ausgewechselt werden, und auch der hierfür erforderliche Arbeitsaufwand ist erstens wegen der relativ geringen Anzahl von Filterkerzen in der zweiten Filtriereinrichtung und auch deswegen, weil die Filterkerzen nach Öffnung des Filterkesseldeckels von oben her ausgewechselt werden können, mit z.B. ein bis zwei Arbeitsstunden relativ gering.

**Patentansprüche**

1. Verfahren zum Filtrieren von Flüssigkeiten, bei dem eine mit Fremdstoffen belastete Flüssigkeit einer als Anschwemmfilter ausgebildeten ersten Filtriereinrichtung zugeleitet und beim Durchlaufen derselben von nahezu den gesamten mitgeführten Fremdstoffen befreit wird und danach mit einem in der ersten Filtriereinrichtung nicht zurückgehaltenen Fremdstoffrest zur Nachfiltration einer zweiten Filtriereinrichtung zugeleitet wird, in der der Fremdstoffrest zumindest zum überwiegenden Teil ausfiltriert wird, dadurch gekennzeichnet, dass als zweite Filtriereinrichtung ein Filter mit einem als Faserschicht ausgebildeten Filtermedium von grösserer Porösität als der mittleren Porösität der Anschwemmschichten der als Anschwemmfilter ausgebildeten ersten Filtriereinrichtung verwendet wird, dessen Filterfläche kleiner als die Filterfläche der ersten Filtriereinrichtung ist.

2. Verfahren nach Anspruch 1, dadurch gekennzeichnet, dass als zweite Filtriereinrichtung ein Filter verwendet wird, dessen Filterfläche kleiner als ein Fünftel, vorzugsweise kleiner als ein Zehntel, der Filterfläche der ersten Filtriereinrichtung ist.

3. Verfahren nach Anspruch 1 oder 2, dadurch gekennzeichnet, dass als zweite Filtriereinrichtung ein Filter mit einem als Faserschicht ausgebildeten Filtermedium von grösserer Dicke als der mittleren Dicke der Primäranschwemmungen der Anschwemmschichten der als Anschwemmfilter ausgebildeten ersten Filtriereinrichtung verwendet wird.

4. Verfahren nach Anspruch 3, dadurch gekennzeichnet, dass als zweite Filtriereinrichtung ein Filter mit einem als Faserschicht ausgebildeten Filtermedium verwendet wird, dessen Dicke grösser als das Doppelte der mittleren Dicke der Primäranschwemmungen der Anschwemmschichten der ersten Filtriereinrichtung ist.

5. Verfahren nach einem der Ansprüche 1 bis 4, dadurch gekennzeichnet, dass als Filterelemente für die zweite Filtriereinrichtung Filterkerzen mit einem rohrförmigen durchbrochenen Tragorgan und einem darauf spiralförmig aufgewickelten Faservlies von mindestens annähernd gleicher Breite wie der Länge des Tragorgans verwendet werden, wobei mit dem Faservlies ein oder mehrere schräg zur Bahnrichtung desselben verlaufende, die übereinanderliegenden Faservliesabschnitte zusammenhaltende Schnüre aufgewickelt sind und der gesamte mit den Schnüren nach Art eines Schnurwickels zusammengehaltene Faservlieswickel das Filtermedium der betreffenden Filterkerze bildet.

6. Verfahren nach einem der Ansprüche 1 bis 5, dadurch gekennzeichnet, dass als Filterhilfsmittel zur Bildung der Primäranschwemmungen der Anschwemmschichten der als Anschwemmfilter ausgebildeten ersten Filtriereinrichtung Kieselgur verwendet wird.

7. Filtrieranlage zur Durchführung des Verfahrens nach Anspruch 1, bestehend aus zwei hintereinandergeschalteten Filtriereinrichtungen, von denen die zur Hauptfiltration dienende erste Filtriereinrichtung ein Anschwemmfilter ist, dadurch gekennzeichnet, dass die zur Nachfiltration dienende zweite Filtriereinrichtung ein mit einem als Faserschicht ausgebildeten Filtermedium versehenes Filter umfasst, dessen Porösität grösser als die mittlere Porösität der Anschwemmschichten der ersten Filtriereinrichtung ist und dessen Filterfläche kleiner als die Hälfte der Filterfläche der ersten Filtriereinrichtung ist.

8. Filtrieranlage nach Anspruch 7, dadurch gekennzeichnet, dass die Filterfläche der zweiten Filtriereinrichtung kleiner als ein Fünftel, vorzugsweise kleiner als ein Zehntel, der Filterfläche der ersten Filtriereinrichtung ist.

9. Filtrieranlage nach Anspruch 7 oder 8, dadurch gekennzeichnet, dass die erste Filtriereinrichtung ein als rückspulbares Kerzenfilter ausgebildetes Anschwemmfilter ist und die Filterfläche der zweiten Filtriereinrichtung kleiner als das 0,75fache, vorzugsweise kleiner als das 0,3fache, der Summe der Aussenflächen sämtlicher Filterkerzen dieses als Kerzenfilter ausgebildeten Anschwemmfilters ist.

10. Filtrieranlage nach einem der Ansprüche 7 bis 9, dadurch gekennzeichnet, dass die zweite Filtriereinrichtung ein Kerzenfilter ist.

11. Filtrieranlage nach Anspruch 10, dadurch gekennzeichnet, dass die Filterkerzen des die zweite Filtriereinrichtung bildenden Kerzenfilters stehende Kerzen mit am unteren Kerzenende angeordnetem, mit dem Kerzeninnenraum verbundenem Filtratablauf sind, wobei die Filtratabläufe der Filterkerzen vorzugsweise in einen unter den Filterkerzen liegenden gemeinsamen Filtratraum münden, der durch eine die stehenden Kerzen tragende Trennwand von einem gemeinsamen Unfiltratraum des Filters abgetrennt ist.

12. Filtrieranlage nach Anspruch 10 oder 11, dadurch gekennzeichnet, dass die Filterkerzen des die zweite Filtriereinrichtung bildenden Kerzenfilters von oben her auswechselbar sind und mit ihren oberen Kerzenenden, vorzugsweise mittels je einer Vertikalführung sowie einer Druckfeder, an einer Halteplatte lösbar befestigt sind.

13. Filtrieranlage nach einem der Ansprüche 10 bis 12, dadurch gekennzeichnet, dass die Filterkerzen des die zweite Filtriereinrichtung bildenden Kerzenfilters je ein rohrförmiges durchbrochenes Tragorgan sowie ein darauf spiralförmig aufgewickeltes Faservlies von mindestens annähernd gleicher Breite wie der Länge des Tragorgans umfassen, wobei vorzugsweise jeweils mit dem Faservlies ein oder mehrere schräg zur Bahnrichtung desselben verlaufende, die übereinanderliegenden Faservliesabschnitte zusammenhaltende Schnüre aufgewickelt sind und der gesamte mit den Schnüren nach Art eines Schnurwickels zusammengehaltene Faservlieswickel das Filtermedium der betreffenden Filterkerze bildet.

**Claims**

1. Method of filtering liquids in which a liquid laden with foreign bodies is fed to a first filtration device, formed as an alluvial filter, and, on passing through the said filter, is freed of virtually all the entrained foreign bodies, after which it is fed, with a residue of foreign bodies not retained in the first filtration device, to a second filtration device for post-filtration, in which at least most of the residual foreign bodies are filtered out, characterized in that, as the second filtration device, a filter with a fibre layer as the filtration medium is used, the filtration medium having a greater porosity than the mean porosity of the alluvial layers of the alluvial filter forming the first filtration device and the filter area of the second filtration device being smaller than the filter area of the first filtration device.

2. Method according to claim 1, characterized in that, as the second filtration device, a filter is used the filter area of which is less than one fifth, preferably less than one tenth, of the filter area of the first filtration device.

3. Method according to claim 1 or 2, characterized in that, as the second filtration device, a filter is used which has a filter medium formed as a layer of fibres thicker than the mean thickness of the primary deposits of the deposit layers of the first filtration device formed as an alluvial filter.

4. Method according to claim 3, characterized in that, as the second filtration device, a filter is used which has a filter medium formed as a layer of fibres thicker than twice the mean thickness of the primary deposits of the alluvial filter of the first filtration device.

5. Method according to any of claims 1 to 4, characterized in that, as the filter elements of the second filtration device, filter cartridges are used which have a tubular, open-work support element and a fibre fleece spirally wound thereon, which fibre fleece has a width which is at least approximately equal to the length of the support element, one or more cords being rolled up with the fibre fleece, diagonally to the direction of the fleece and holding the overlying sections of fibre fleece together, and the whole roll of fibre fleece, held together by the cords in the manner of a roll of cord, forming the filter medium of the respective filter cartridge.

6. Method according to any of claims 1 to 5, characterized in that kieselguhr is used as the filter means for forming the primary deposits of the alluvial layers of the first filtration device formed an an alluvial filter.

7. Filtration system for applying the method according to claim 1, comprising two series-connected filtration devices of which the first filtration device, which provides the main filtration, is an alluvial filter, characterized in that the second filtration device used for post-filtration includes a filter with a filter medium formed as a layer of fibres the porosity of which is greater than the mean porosity of the alluvial layers of the first filtration device and the filter area of which is less than half the filter area of the first filtration device.

8. Filtration system according to claim 7, characterized in that the filter area of the second filtration device is less than one fifth, preferably less than one tenth, of the filter area of the first filtration device.

9. Filtration system according to claim 7 or 8, characterized in that the first filter filtration device is an alluvial filter formed as a reversible flow cartridge filter and the filter area of the second filtration device is less than 0.75 times, preferably less than 0.3 times, the sum of the outer surface areas of all filter cartridges of this alluvial filter formed as a cartridge filter.

10. Filtration system according to any of claims 7 to 9, characterized in that the second filtration device is a cartridge filter.

11. Filtration system according to claim 10, characterized in that the filter cartridges of the cartridge filter forming the second filtration device are upright cartridges with a filtrate outlet arranged at the lower end of each cartridge and connected with the interior space of the cartridge, wherein the filtrate outlets of the filter cartridges preferably discharge into a common filtrate compartment located under the filter cartridges and which is separated from the filter's common non-filtrate compartment by a partition that carries the upright cartridges.

12. Filtration system according to claim 10 or 11, characterized in that the filter cartridges of the cartridge filter forming the second filtration device can be replaced from above and that their top ends are attached, in a detachable manner, to a retaining plate, preferably each by means of a vertical guide and a compression spring.

13. Filtration system according to any of claims 10 to 12, characterized in that the filter cartridges of the cartridge filter forming the second filtration device each include a tubular, open-work support element and a fibre fleece spirally wound thereon, which fibre fleece has a width which is at least approximately equal to the length of the support element, one or more cords being preferably rolled up with the fibre fleece, diagonally to the direction of the fleece and holding the overlying sections of fibre fleece together and the whole roll of fibre fleece, held together by the cords in the manner of a roll of cord, forming the filter medium of the respective filter cartridge.

## Revendications

1. Procédé pour la filtration de liquides selon lequel un liquide chargé d'impuretés est conduit à un premier dispositif de filtration sous forme d'un filtre à couches, est débarrassé au cours de son passage dans ledit dispositif de filtration sensiblement de la totalité des impuretés entraînées, puis est conduit, avec des impuretés résiduelles qui n'ont pas été retenues dans le premier dispositif de filtration, en vue d'une filtration supplémentaire à un deuxième dispositif de filtration dans lequel les impuretés résiduelles sont au moins en majeure partie éliminées par filtration, caractérisé en ce que l'on utilise, en tant que deuxième dispositif de filtration, un filtre comportant un milieu filtrant sous forme d'une couche fibreuse, dont la porosité est supérieure à la porosité moyenne des couches du premier dispositif de filtration sous forme d'un filtre à couches, et dont la surface filtrante est inférieure à la surface filtrante du premier dispositif de filtration.

2. Procédé selon la revendication 1, caractérisé en ce que l'on utilise, en tant que deuxième dispositif de filtration, un filtre dont la surface filtrante est inférieure au cinquième de préférence inférieure au dixième de la surface filtrante du premier dispositif de filtration.

3. Procédé selon les revendications 1 ou 2, caractérisé en ce que l'on utilise en tant que deuxième dispositif de filtration, un filtre comportant un milieu filtrant sous forme d'une couche fibreuse d'épaisseur supérieure à l'épaisseur moyenne des dépôts primaires, des couches de dépôt du premier dispositif de filtration sous forme de filtre à couches.

4. Procédé selon la revendication 3, caractérisé en ce que l'on utilise, en tant que deuxième dispositif de filtration, un filtre comportant un milieu filtrant sous forme d'une couche fibreuse, dont l'épaisseur est supérieure à deux fois l'épaisseur moyenne des dépôts primaires des couches de dépôt du premier dispositif de filtration.

5. Procédé selon l'une des revendications 1 à 4, caractérisé en ce que l'on utilise, en tant qu'éléments filtrants pour le deuxième dispositif de filtration, des bougies filtrantes comportant un organe de support tubulaire ajouré et un non-tissé fibreux enroulé en spirale sur l'organe de support et de largeur au moins sensiblement égale à la longueur de l'organe de support, un ou plusieurs cordons maintenant ensemble les segments de non-tissé fibreux superposés étant enroulés avec le non-tissé fibreux en biais par rapport à la direction de celui-ci, et l'ensemble du manchon de non-tissé fibreux maintenu par les cordons à la manière d'une bobine de fil formant le milieu filtrant desdites bougies filtrantes.

6. Procédé selon l'une des revendications 1 à 5, caractérisé en ce que l'on utilise du kieselguhr en tant qu'adjuvant de filtration pour la formation des dépôts primaires des couches de dépôt du premier dispositif de filtration sous forme de filtre à couches.

7. Installation de filtration pour la mise en oeuvre du procédé selon la revendication 1, consistant en deux dispositifs de filtration reliés en série, le premier dispositif de filtration servant à la filtration principale étant un filtre à couches, caractérisée en ce que le deuxième dispositif de filtration servant à la filtration supplémentaire comprend un filtre muni d'un milieu filtrant sous forme d'une couche fibreuse dont la porosité est supérieure à la porosité moyenne des couches de dépôt du premier dispositif de filtration et dont la surface filtrante est inférieure à la moitié de la surface filtrante du premier dispositif de filtration.

8. Installation de filtration selon la revendication 7, caractérisée en ce que la surface filtrante du deuxième dispositif de filtration est inférieure au cinquième, de préférence inférieure au dixième de la surface filtrante du premier dispositif de filtration.

9. Installation de filtration selon les revendications 7 ou 8, caractérisée en ce que le premier dispositif de filtration est un filtre à couches sous forme d'un filtre à bougies lavable à contre-courant et en ce que la surface filtrante du deuxième dispositif de filtration est inférieure à 0,75 fois, de préférence inférieure à 0,3 fois la somme des surfaces externes de l'ensemble des bougies filtrantes dudit filtre à couches sous forme de filtre à bougies.

10. Installation de filtration selon l'une des revendications 7 à 9, caractérisée en ce que le deuxième dispositif de filtration est un filtre à bougies.

11. Installation de filtration selon la revendication 10, caractérisée en ce que les bougies filtrantes du filtre à bougies formant le deuxième dispositif de filtration sont des bougies verticales comportant à leur extrémité inférieure une évacuation du filtrat reliée à l'espace intérieur des bougies, les évacuations du filtrat des bougies filtrantes débouchant de préférence dans un compartiment commun pour le filtrat situé au dessous des bougies filtrantes, ce compartiment étant séparé d'un compartiment commun du filtre pour le liquide non filtré par une cloison de séparation portant les bougies verticales.

12. Installation de filtration selon les revendications 10 ou 11, caractérisée en ce que les bougies filtrantes du filtre à bougies constituant le deuxième dispositif de filtration sont échangeables par en haut et en ce qu'elles sont fixées de façon amovible à une plaque de maintien par leur extrémité supérieure, de préférence au moyen chaque fois d'un guide vertical et d'un ressort à pression.

13. Installation de filtration selon l'une des revendications 10 à 12, caractérisée en ce que les bougies filtrantes du filtre à bougies formant le deuxième dispositif de filtration comportent chacune un organe de support tubulaire ajouré ainsi qu'un non-tissé fibreux enroulé en spirale sur l'organe de support et de largeur au moins sensiblement égale à la longueur de l'organe de support, un ou plusieurs cordons maintenant ensemble les segments de non-tissé fibreux superposés étant de préférence chaque fois enroulés avec le non-tissé fibreux en biais par rapport à la direction de celui-ci, et l'ensemble du manchon de non-tissé fibreux maintenu par les cordons à la manière d'une bobine de fil formant le milieu filtrant desdites bougies filtrantes.